# EUROPÄISCHE PATENTSCHRIFT

(11) **EP 3 087 887 B1**
(45) Veröffentlichungstag und Bekanntmachung des Hinweises auf die Patenterteilung: **24.02.2021**
(21) Anmeldenummer: 16166709.2
(22) Anmeldetag: 22.04.2016
(51) Int. Cl.: A47K 11/02

(54) **FOLIENKASSETTE FÜR EINE TOILETTENVORRICHTUNG**
FILM CASSETTE FOR A TOILET DEVICE
CASSETTE DE FILM POUR UN DISPOSITIF DE TOILETTES

(30) Priorität: 27.04.2015 CH 5762015
(43) Veröffentlichungstag der Anmeldung: 02.11.2016
(73) Patentinhaber: CLOSAC AG, 9472 Grabs (CH)
(72) Erfinder: Untersander, Philipp, 9472 Grabs (CH)
(74) Vertreter: Otten, Roth, Dobler & Partner mbB Patentanwälte

(56) Entgegenhaltungen:
- DE-A1- 10 248 834
- US-A- 3 723 999
- US-A1- 2003 121 923
- US-A1- 2008 263 756
- US-A1- 2012 000 012

## Beschreibung

### Gebiet der Technik

Die Erfindung betrifft Kassetten für Folienschlauch zur Verwendung in einer Toilettenvorrichtung, Kits aus solchen Kassetten und Schlauchfolien, sowie Toilettenvorrichtungen mit solchen Kassetten.

### Technologischer Hintergrund

Fäkalienbelastete Abwässer werden in der Regel via die Kanalisation der Reinigung in einer Kläranlage zugeführt. Bei fehlendem Kanalisationsanschluss können die Abwässer in Tanks gesammelt und anschliessend abtransportiert werden. Problematisch sind diese herkömmlichen Toilettenvorrichtungen mit Kanalisationsanschluss, wenn Abwässer aufgrund menschlicher Ausscheidungen stark mit problematischen Substanzen wie Abbauprodukten von Medikamenten belastet sind. Dies ist zum Beispiel regelmässig der Fall in Krankenhäusern. Solche Abwässer können die Biologie von Kläranlagen unter Umständen stark schädigen, was wiederum negative Auswirkungen auf die Qualität der Reinigungswirkung hat. Gewisse Substanzklassen können zudem nur beschränkt oder gar nicht aus dem Abwasser entfernt werden und gelangen so in den natürlichen Wasserkreislauf, wo sie eine schädliche Wirkung entfalten können. Für solche Anwendungen wären an und für sich wasserlose Toilettensysteme geeigneter, welche es erlauben, die anfallenden belasteten Abfallmaterialien umweltgerecht zu entsorgen, beispielsweise durch Verbrennen.

Eine weitere Anwendung von wasserlosen Toilettensystem sind Orte mit beschränkter oder überhaupt keiner Fliesswasserversorgung, oder ohne Kanalisationsanschluss, sowie Fahrzeuge, beispielsweise Reisebusse und Eisenbahnwaggons, und Flugzeuge, bei welchen die für herkömmliche Toilettensysteme benötigten Spülwassermengen Gewichts- und Kostenprobleme verursachen, und/oder die entsprechenden Vorratstanks und Auffangvorrichtung zu viel Volumen benötigen.

WO 2011/113164 A2 zeigt eine wasserlose Toilettenvorrichtung mit einem Sitz, unter dem ein zur Aufnahme von menschlichen Ausscheidungsprodukten vorgesehener, einseitig verschlossener Folienschlauch angebracht ist. Ein Auffangbehälter dient zur Aufnahme abgetrennter geschlossener Beutel. Über dem Auffangbehälter sind Mittel zum Verschliessen des Folienschlauchs zu einem geschlossenen Beutel und zum Abtrennen des geschlossenen Beutels vorgesehen, sodass wiederum ein einseitig verschlossener Folienschlauch entsteht. Während der Benützung befindet sich der Sitz neben der Auffangvorrichtung. Nach der Benützung schwenkt der Sitz in eine Position, in welcher er sich über der Auffangvorrichtung befindet. Der Beutel wird geschlossen und abgetrennt, und fällt in den darunter liegenden Auffangbehälter.

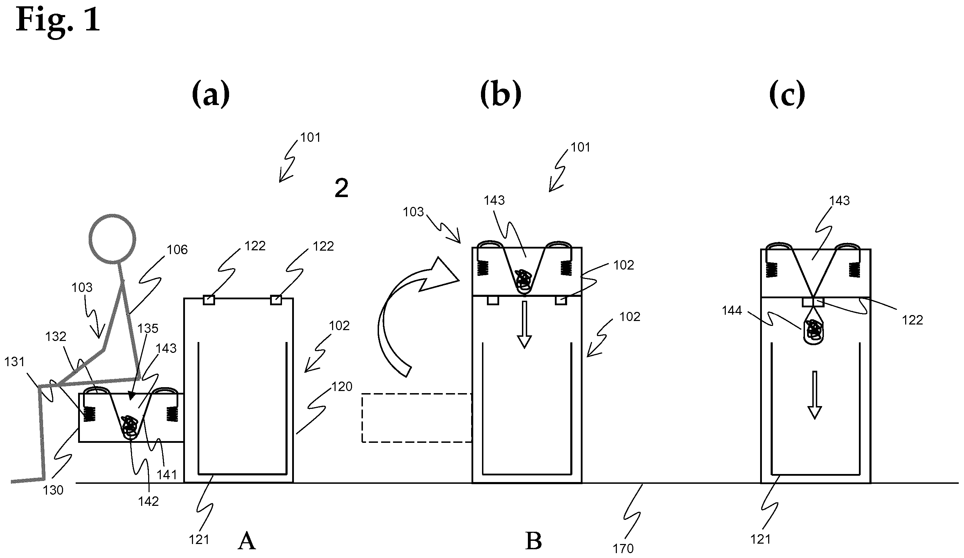

Eine solche Toilettenvorrichtung aus dem Stand der Technik ist in Figur 1 dargestellt. Figur 1(a) zeigt dabei eine solche Toilettenvorrichtung 1 in einer Benutzungsstellung A. Ein Sitz 103 ist neben einer tragenden Rahmenstruktur 102 der Toilettenvorrichtung 101 angeordnet, und wird von einer an der Rahmenstruktur 102 angebrachten Vorrichtung (nicht dargestellt) zum Halten und Bewegen des Sitzes getragen. Die Rahmenstruktur 102 dient als Traggerüst der Vorrichtung zum Halten und Bewegen des Sitzes. Im dargestellten Beispiel umfasst die Rahmenstruktur weiter ein Gehäuse 120 und eine Auffangvorrichtung 121, im gezeigten Beispiel ein tonnenförmiger Auffangbehälter.

Der Sitz umfasst ein Sitzelement 132 mit einer Öffnung 315, vorzugsweise in der Form eines Ringes, eines Ovals oder einer anderen geeigneten abgerundeten Form ohne Ecken.

Das Sitzelement 132 ist gegenüber der Verschalung 130 des Sitzes angehoben. Ein Folienschlauch 141 wird von aussen über das Sitzelement 132 geführt, so dass das Sitzelement immer hygienisch abgedeckt ist. Auf der Innenseite des Sitzelements wird der Folienschlauch wieder nach unten geführt. Der Folienschlauch 141 ist an diesem Ende geschlossen, so dass sich unterhalb des Sitzelements 132 ein trichterförmiger, gegen oben offener Beutel 143 bildet, der direkt als Auffangtrichter dienen kann.

Unterhalb des Sitzelements 132 ist ein Schlauchvorrat 131 angebracht, aus welchem der Folienschlauch 141 gespeist wird. Der Schlauchvorrat 131 kann beispielsweise aus einem ziehharmonikaähnlichen, kreisrunden Vorratsstapel bestehen. Der Folienschlauch 141 sollte die notwendige mechanische Belastbarkeit aufweisen, und bevorzugt blickdicht sein. Der Folienschlauch 141 wird oberhalb des Toilettenrings 132 durchgeführt, so dass dessen Reinigung entfällt, da die Folie 141 nach jeder Benutzung ersetzt wird.

Während der Benutzung der Toilettenvorrichtung 101 sitzt ein Benutzer 106 auf dem Sitzelement 132. Anfallende menschliche Ausscheidungsprodukte 412 und verbrauchtes Toilettenpapier verbleiben im offenen Beutel 143. Nach der Benutzung löst der Benutzer oder ein geeigneter automatischer Mechanismus den Entleerungsvorgang der erfindungsgemässen Toilettenvorrichtung aus. Eine geeignete Vorrichtung hebt den Sitz 103 aus der Benutzungsposition A in die Entleerungsposition B, wie in Figur 1(b) gezeigt. Der Sitz 3 befindet sich nun oberhalb der Auffangvorrichtung 121.

Mit geeigneten Mitteln, wird nun der gefüllte offene Beutel 143 nach unten gezogen, wobei gleichzeitig frischer Folienschlauch 141 aus dem Schlauchvorrat1 131 nachgezogen wird. Mit einer Verschliess- und Abtrennvorrichtung 122 wird der offene Beutel dicht verschlossen. In Figur 1(c) ist dargestellt, wie nach dem Verschliessen der nun geschlossene Beutel 144 mit der Verschliess- und Abtrennvorrichtung 122 vom Folienschlauch abgetrennt wird, sodass er aufgrund der Schwerkraft in die Auffangvorrichtung 121 fällt. Der Verschluss des Folienschlauchs wird dabei vorzugsweise so ausgeführt, dass beim Abtrennen des Beutels der Folienschlauch 141 an seinem neuen unteren Ende wiederum geschlossen ist. Nach dem Abtrennen des Beutels und der Bildung des neuen offenen Beutels ist die erfindungsgemässe Toilettenvorrichtung bereit für eine nächste Benutzung, und kann zu diesem Zweck wieder in die Benutzungsposition A gebracht werden.

Die Schweizer Patentanmeldung Nr. 01599/14 vom 19. Oktober 2014, bzw. das parallele deutsche Gebrauchsmuster DE 20201 5105523 U1, deren Offenbarungsgehalt hiermit in seiner Gesamtheit durch Referenz in diese Beschreibung mit aufgenommen wird, zeigt eine wasserlose Toilettenvorrichtung mit einem Sitzmodul und einem Gehäusemodul, wobei das Sitzmodul einen Sitz mit einer Öffnung aufweist, unter der ein zur Aufnahme von menschlichen Ausscheidungsprodukten vorgesehener einseitig verschlossener und gegen die Öffnung des Sitzes hin offener Folienschlauch angebracht ist, sowie Mittel zum Verschliessen des Folienschlauchs zu einem geschlossenen Beutel und zum Abtrennen des geschlossenen Beutels, so dass wiederum ein einseitig verschlossener Folienschlauch entsteht. Das Gehäusemodul weist einen Auffangbehälter auf, der zur Aufbewahrung des Beutels eingerichtet ist. Weiter weist die Toilettenvorrichtung Mittel auf, um nach dem Abtrennen eines Beutels den Beutel aufzufangen und in den Auffangbehälter zu transportieren.

DE 10100962 A1 zeigt eine Vakuumtoilette für Verkehrsmittel. Ein Vorratsbehälter enthält einen Folienschlauch, der nach Innen hin in die Schüssel geführt wird. wird. Der Vorratsbehälter ist unterhalb eines hochklappbaren Sitzrings angeordnet. Durch das Hochklappen des Sitzringes wird eine Öffnung des Vorratsbehälters frei zugänglich, durch welche der Vorratsbehälter mit Folie befüllt werden kann.

Der für den funktionsgemässen Betrieb der oben besprochenen wasserlosen Toilettenvorrichtungen benötigte Folienschlauch ist ein Verbrauchsmaterial. Ein entsprechender Vorrat muss regelmässig nachgefüllt werden, was aufwendig ist.

Der für den funktionsgemässen Betrieb der oben besprochenen wasserlosen Toilettenvorrichtungen benötigte Folienschlauch ist ein Verbrauchsmaterial. Ein entsprechender Vorrat muss regelmässig nachgefüllt werden, was aufwendig ist.

Es besteht das allgemeine das Bedürfnis nach weiteren Verbesserungen im Bereich solcher wasserlosen Toilettensysteme, insbesondere für den effizienten Betrieb solcher Toilettenvorrichtungen.

US 3,723,999 offenbart eine Einrichtung für Folienschlauch zur Verwendung in einer Toilettenvorrichtung, umfassend ein Element zur Aufnahme eines Folienschlauchs, mit einem Boden, einer äußeren Wand und einer inneren Wand, und ein Sitzelement mit einer Sitzfläche, wobei die innere Wand, die äußere Wand und der Boden des Elements sowie die Sitzfläche des Sitzelements einen im Wesentlichen ringförmigen Lagerraum zur Aufnahme des Folienschlauchs bilden, und wobei das genannte Sitzelement entlang eines äußeren Rands auf der äußeren Wand des Elements aufliegend mit dem Element verbunden ist, wobei das Sitzelement entlang des äußeren Rands auf der äußeren Wand des Elements aufliegt und entlang einem inneren Umfang der Kassette Einrichtung zwischen einem inneren Rand des Sitzelements und der inneren Wand des Elements eine durchgehende Ausnehmung zur Abgabe des Folienschlauchs vorgesehen ist. US 3,723,999 zeigt auch eine tragbare, wasserfreie Toilettenvorrichtung mit Mittel zum Verschliessen von röhrenförmigem Plastikmaterial, das Abfall enthält.

US 2003/121923 A1 zeigt eine Kassette für Folienbeutel für ein Abfallbehälter-System, beispielsweise für Katzenstreu oder Windeln, bei welchem jeweils ein gefüllter Beutel durch Verdrehen der Folie halbwegs dicht abgeschlossen wird. Die Folie wird von aussen über einen offenen Trichter nach Innen geführt, wo ein Beutel gebildet wird.

### Aufgabe der Erfindung

Eine Aufgabe der Erfindung ist es, eine Kassette für Folienschlauch zur Verwendung in einer Toilettenvorrichtung zur Verfügung zu stellen, welche einen effizienten Betrieb der Toilettenvorrichtung ermöglicht. Insbesondere soll eine solche Kassette das einfachere und schnellere Nachfüllen des Folienschlauchs ermöglichen.

Eine solche Kassette soll in einer Toilettenvorrichtung, wie sie in den oben besprochenen Toilettenvorrichtungen offenbart ist, verwendet werden können.

Insbesondere soll eine erfindungsgemässe Kassette kompakt sein.

Diese und andere Aufgaben werden gelöst durch eine erfindungsgemässe Kassette, ein erfindungsgemässes Kit und eine erfindungsgemässe Toilettenvorrichtung gemäss den Ansprüchen 1, 9 und 10. Weitere bevorzugte Ausführungsformen sind in den abhängigen Ansprüchen 2-8 gegeben.

### Darstellung der Erfindung

Die Erfindung löst diese Aufgaben durch eine Kassette, die mindestens die Merkmale des Anspruchs 1 aufweist.

Ein erster Aspekt der Erfindung betrifft eine Kassette für Folienschlauch zur Verwendung in einer Toilettenvorrichtung. Eine solche erfindungsgemässe Kassette für Folienschlauch zur Verwendung in einer Toilettenvorrichtung umfasst ein im Wesentlichen ringförmiges Kassettenelement zur Aufnahme eines Folienschlauchs, mit einem Boden, einer äusseren Wand und einer inneren Wand, und ein im wesentlichen ringförmiges Sitzelement mit einer Sitzfläche. Die innere Wand, die äussere Wand und der Boden des Kassettenelements sowie die Sitzfläche des Sitzelements bilden einen im Wesentlichen ringförmigen Lagerraum zur Aufnahme des Folienschlauchs. Das Sitzelement ist entlang eines inneren Rands auf der inneren Wand des Kassettenelements aufliegend oder entlang eines äusseren Rands auf der äusseren Wand des Kassettenelements aufliegend reversibel mit dem Kassettenelement verbunden.

Funktionsgemäss muss bei einer Toilettenvorrichtung wie eingangs besprochen der Vorrat an Folienschlauch unterhalb der Sitzfläche angeordnet sein. Der Folienschlauch wird dabei in geraffter Form aufbewahrt, zentriert zur Öffnung der Sitzfläche der Toilettenvorrichtung. Eine solche erfindungsgemässe Kassette erlaubt es, den Folienschlauch, der Verbrauchsmaterial ist, schnell und einfach auszutauschen, ohne das zuerst die Sitzfläche oder ein anderes Bauteil entfernt werden muss. Dazu wird die Kassette inkl. der darin integrierten Sitzfläche entfernt, und durch eine frische Kassette mit einem neuen Vorrat an Folienschlauch ersetzt.

Die erfindungsgemässe Kassette kann als Einwegsystem ausgestaltet sein, und nach Gebrauch entsorgt werden. Vorteilhaft wird jedoch eine erfindungsgemässe Kassette als Mehrwegsystem konzipiert, dass mehrmals mit einem Vorrat an Folienschlauch wiederbefüllt werden kann. Das Wiederbefüllen kann durch den Benutzer selbst geschehen, oder zentral, beispielsweise durch den Hersteller, der retournierte leere Kassetten wieder befüllt. Eine Wiederbefüllung durch den Hersteller erlaubt es zudem, den Folienschlauch bereits betriebsbereit vorzubereiten, indem beispielsweise der Folienschlauch bereits zu einem ersten, halboffenen Beutel verschlossen bereitgestellt wird.

Aufgrund der Integration eines Sitzelementes in eine Folienkassette bzw. die Integration eines Kassettenelements in eine Sitzeinheit ist eine erfindungsgemässe Folienkassette sehr kompakt, und erlaubt auf diese Weise auch den Bau von entsprechend kompakten Toilettenvorrichtungen. Ein kompaktes Bauvolumen ist insbesondere dann von Vorteil, wenn unterhalb des Toilettensitzes einer Toilettenvorrichtung noch weitere technsiche Vorrichtungen angeordnet werden müssen, beispielsweise Versiegelungsvorrichtungen oder Abtrennvorrichtungen, oder wenn die Sitzeinheit während des Betriebs bewegt wird und dabei andere Teile der Vorrichtung passieren muss.

In einer ersten Ausführungsform einer Kassette , die nicht Teil der Erfindung ist, liegt das Sitzelement entlang des inneren Rands auf der inneren Wand des Kassettenelements auf. Entlang einem äusseren Umfang der Kassette ist zwischen einem äusseren Rand des Sitzelements und der äusseren Wand des Kassettenelements eine durchgehende Ausnehmung zur Abgabe des Folienschlauchs vorgesehen.

Bei einer solchen vorteilhaften Variante einer Kassette verläuft im Betrieb der Folienschlauch vom gerafften Folienvorrat im Lagervolumen der Kassette durch die Ausnehmung am äusseren Umfang über die ringförmige Sitzfläche von oben in die Öffnung der Kassette bzw. Sitzfläche, wo sie einen unten geschlossenen Trichter bildet. Da die Folie über die Sitzfläche verläuft, wird beim Nachziehen des Folienschlauchs die Folie im Bereich der Sitzfläche nach innen gezogen und durch frische Folie ersetzt. Entsprechend entfällt eine Reinigung der Sitzfläche, da diese nie offen liegt und verschmutzt werden kann.

In einer vorteilhaften Variante einer solchen Ausführungsform überragt der äussere Rand des Sitzelements vom Zentrum der Kassette her gesehen die äussere Wand des Kassettenelements. In einer besonders vorteilhaften Variante überlappt der äussere Rand des Sitzelements einen oberen Rand der äusseren Wand des Kassettenelements.

Die vorgenannten Merkmale verhindern unter anderem ein Eindringen von Schmutz in das Innere der Kassette durch die durchgehende Ausnehmung am äusseren Umfang.

In der Erfindung liegt das Sitzelement entlang des äusseren Rands auf der äusseren Wand des Kassettenelements auf. Entlang einem inneren Umfang der Kassette ist zwischen einem inneren Rand des Sitzelements und der inneren Wand des Kassettenelements eine durchgehende Ausnehmung zur Abgabe des Folienschlauchs vorgesehen.

Bei einer solchen vorteilhaften Variante einer erfindungsgemässen Kassette verläuft im Betrieb der Folienschlauch vom gerafften Folienvorrat im Lagervolumen der Kassette durch die Ausnehmung am inneren Umfang direkt in die Öffnung der Kassette bzw. Sitzfläche, wo sie in einen unten geschlossenen Trichter bildet.

In einer vorteilhaften Variante einer solchen Ausführungsform überragt der innere Rand des Sitzelements in Richtung Zentrum der Kassette hin gesehen die innere Wand des Kassettenelements. In einer besonders vorteilhaften Variante überlappt der innere Rand des Sitzelements einen oberen Rand der inneren Wand des Kassettenelements.

Die vorgenannte Merkmale verhindern unter anderem ein Eindringen von Schmutz in das Innere der Kassette durch die durchgehende Ausnehmung am inneren Umfang, was bei dieser Variante besonders wichtig ist.

Vorteilhaft ist bei einer erfindungsgemässen Kassette ein Folienschlauch innerhalb des Lagerraums angeordnet, wobei ein Ende des Folienschlauchs vom Lagerraum her durch die Ausnehmung hindurch nach aussen gezogen ist.

Bei einer erfindungsgemässen Kassette das Kassettenelement und das Sitzelement sind reversibel miteinander verbunden. Das Kassettenelement und das Sitzelement können dabei durch zwei oder mehr Schraubverbindungen verbunden sein.

Vorteilhaft sind zudem bei einer erfindungsgemässen Kassette das Kassettenelement und/oder das Sitzelement dampfsterilisierbar bzw. autoklavierbar.

Zu diesem Zweck sind vorteilhaft die einzelnen Elemente aus geeigneten Materialien gefertigt, beispielsweise Metall oder geeignete, hitzeresistente Polymermaterialien.

Bei einer anderen vorteilhaften Ausführungsform solcher erfindungsgemässer Kassetten weist die Sitzfläche des Sitzelements eine Polsterung auf. Diese erhöht den Benutzungskomfort, und kann weiter als Wärmeisolationsschicht dienen.

Bei einer weiteren vorteilhaften Ausführungsform solcher erfindungsgemässer Kassetten ist in der Sitzfläche des Sitzelements eine Heizvorrichtung vorgesehen. Eine solche Heizvorrichtung erlaubt es, die Sitzfläche vorzuwärmen, was den Benutzungskomfort erhöht, insbesondere wenn die Sitzfläche aus Metall besteht.

Ein zweiter Aspekt der Erfindung betrifft ein Kit umfassend eine oder mehrere erfindungsgemässe Kassetten für Folienschlauch und eine oder mehrere Folienschläuche.

Ein dritter Aspekt der Erfindung betrifft eine Toilettenvorrichtung mit einer erfindungsgemässen Kassette für Folienschlauch oder einem erfindungsgemässen Kit.

### Kurze Beschreibung der Zeichnungen

Zum besseren Verständnis der vorliegenden Erfindung wird nachfolgend auf die Zeichnungen Bezug genommen. Diese zeigen lediglich Ausführungsbeispiele des Erfindungsgegenstands.
- Figur 1: zeigt schematisch eine Schnittansicht durch eine Ausführungsform einer Toilettenvorrichtung aus dem Stand der Technik, mit drei Phasen (a), (b), (c) des Betriebs.
- Figur 2: zeigt eine teilweise angeschnitten dargestellte Ausführungsform einer Kassette für Folienschlauch, die nicht Teil der Erfindung ist.
- Figur 3: zeigt die Kassette aus Figur 2, (a) in einer Explosionsdarstellung; (b) in perspektivischer Ansicht; (c) in einem Querschnitt entlang der Schnittebene C-C; (d) in einem Detail des Querschnitt aus (c); und (e) im gleichen Detail mit schematisch dargestelltem Verlauf des Folienschlauchs.
- Figur 4: zeigt schematisch im Querschnitt eine Ausführungsform einer Kassette, die nicht **Teil** der Erfindung ist, bei der die aussen liegende Ausgabeausnehmung nahe am Boden des Kassettenelements angeordnet ist.
- Figur 5: zeigt schematisch im Querschnitt eine Ausführungsform einer erfindungsgemässen Kassette, mit innen liegender Ausgabeausnehmung und schematisch dargestelltem Verlauf der Folie.
- Figur 6: zeigt schematisch im Querschnitt eine weitere Ausführungsform einer Kassette, die nicht Teil der Erfindung ist, mit aussen liegender Ausgabeausnehmung und überlappenden Rändern von Sitzelement und Kassettenelement.
- Figur 7: zeigt schematisch im Querschnitt eine Ausführungsform einer Kassette, die nicht Teil der Erfindung ist, mit gepolsterter Sitzfläche.
- Figur 8: zeigt schematisch im Querschnitt eine Ausführungsform Kassette, die nicht Teil der Erfindung ist, mit heizbarer Sitzfläche.

### Ausführung der Erfindung

Die im Folgenden gegebenen Beispiele dienen der besseren Veranschaulichung der Erfindung, sind jedoch nicht dazu geeignet, die Erfindung auf die hierin offenbarten Merkmale zu beschränken.

Im Rahmen dieser Beschreibung werden die Begriffe "Schlauchfolie" und "Folienschlauch" synonym verwendet. Das gleiche gilt für die Begriffe "Kassette für Folienschlauch" und "Folienkassette". Der Begriff "ringförmig" umfasst nicht nur kreisrunde Formen, sondern auch elliptische Formen, und ganz allgemein im Wesentlichen ovale bzw. eiförmige Formen, wie sie für Sitzringe bzw. WC-Brillen allgemein gebräuchlich sind.

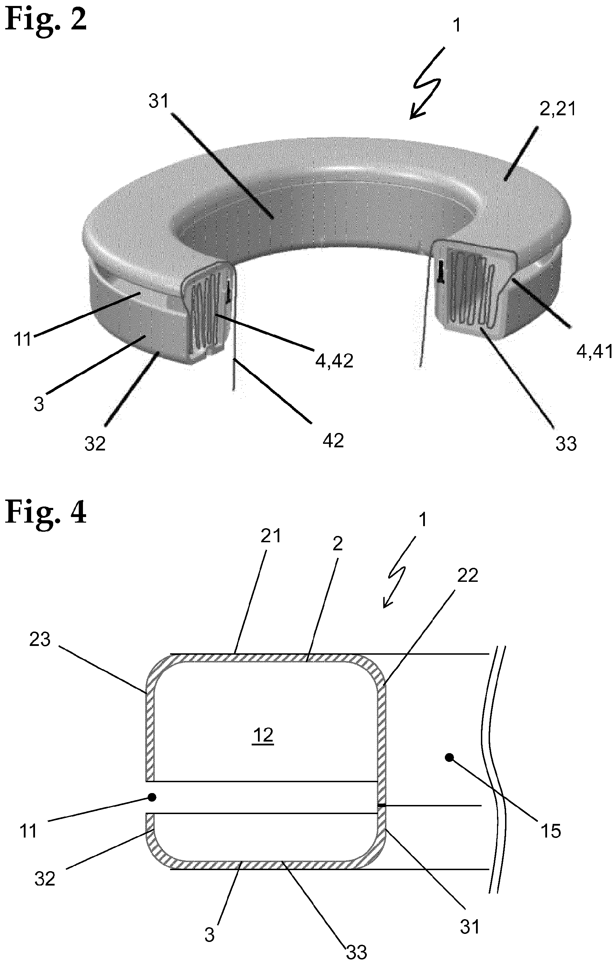

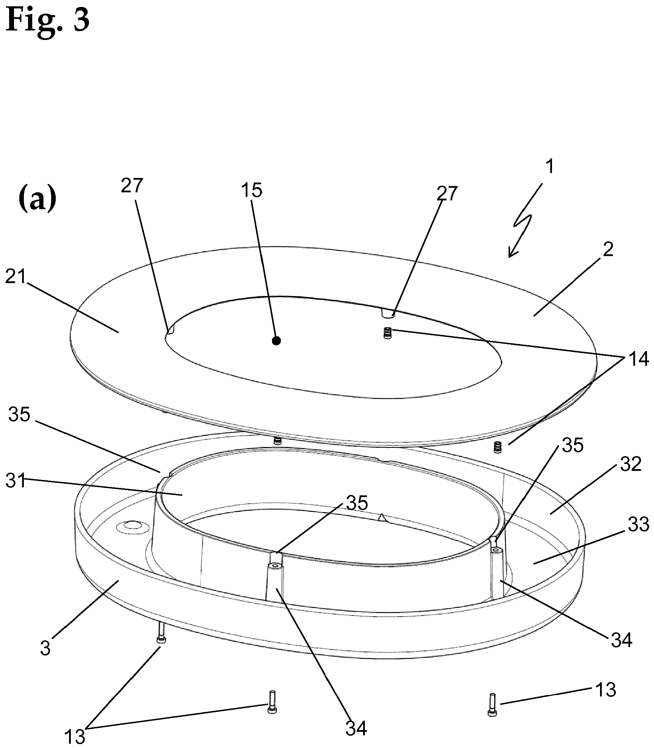

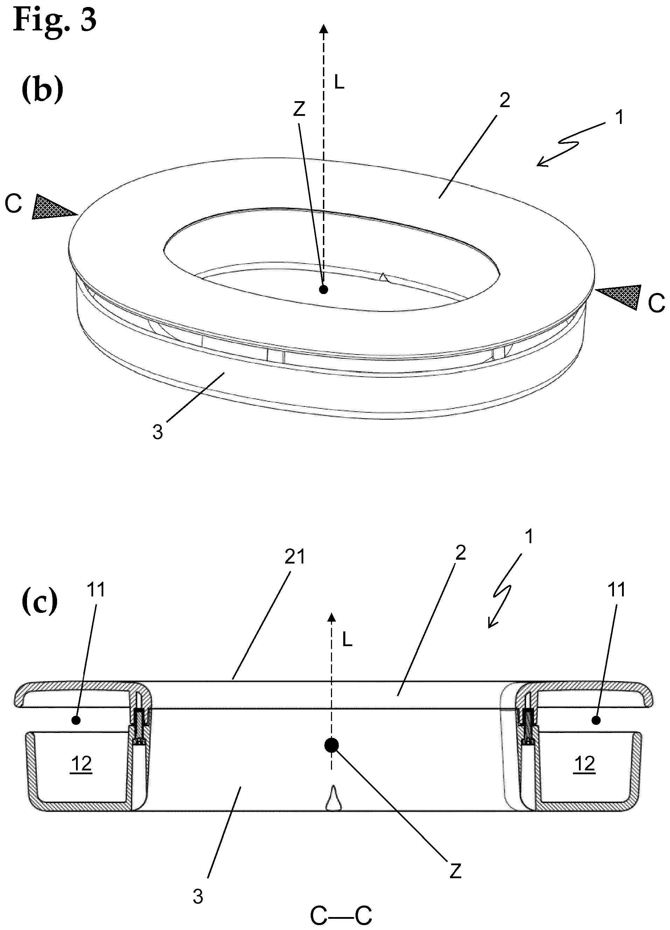

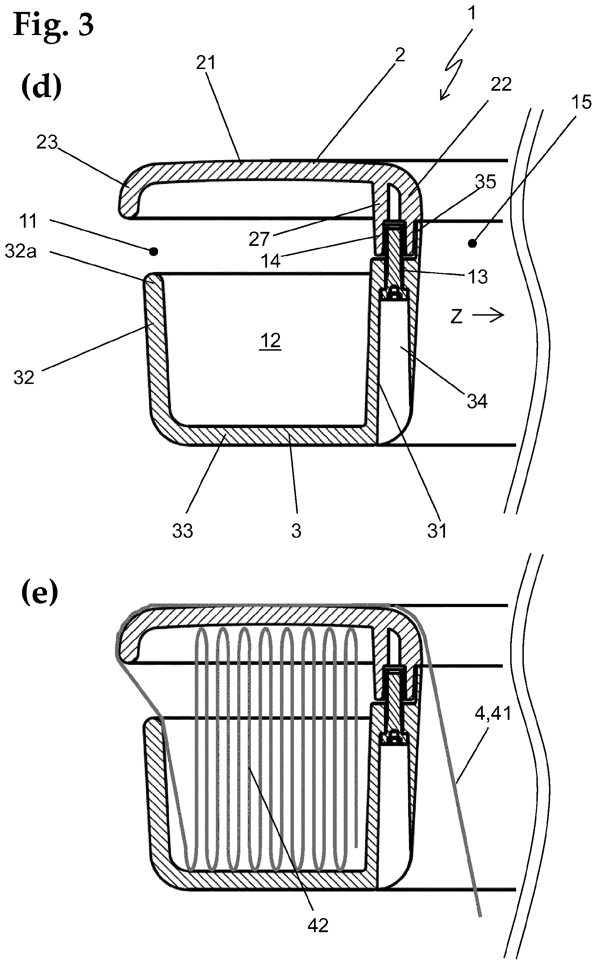

Eine vorteilhafte Ausführungsform einer Folienkassette 1 ist in den Figuren 2 und 3 dargestellt. Die dargestellte Folienkassette 1 besteht aus einem ringförmigen Sitzelement 2 mit Sitzfläche 21 und Öffnung 15, auf welchem der Benutzer während der Verwendung einer Toilettenvorrichtung sitzt. Das Sitzelement weist einen leicht nach unten gewölbten äusseren Rand 23 und einen inneren Rand 22 auf. Unterhalb des Sitzelements 2 ist ein Kassettenelement 3 angeordnet, mit einer inneren Wand 31, einer äusseren Wand 32 und einem Boden 33. Diese bilden zusammen mit der darüber liegenden Sitzfläche 21 ein torusförmiges Lagervolumen 12, in welchem der Vorrat 42 an Schlauchfolie 4 als in geeigneter Form zusammengerafftes Bündel aufbewahrt wird.

Die Kassette 1 ist dafür eingerichtet, in einer Toilettenvorrichtung, wie sie beispielsweise aus der WO 2011/113164 A2 bekannt ist, oder wie sie in der Schweizer Patentanmeldung Nr. 01599/14 beschrieben wird, eingesetzt zu werden. Zu diesem Zweck sind geeignete Befestigungsmittel vorgesehen (nicht dargestellt), welche eine reversible Befestigung der Kassette an der Toilettenvorrichtung ermöglichen.

Im gezeigten Ausführungsbeispiel liegt der innere Rand 22 des Sitzelements auf der inneren Wand 31 des Kassettenelements. Das Gewicht eines auf der Sitzfläche 21 sitzenden Benutzers wird somit über den inneren Rand 22 auf die innere Wand 31 des Kassettenelements übertragen, und von dieser auf eine Struktur einer Toilettenvorrichtung, auf welcher die Kassette montiert ist. Die erforderliche Stabilität wird dabei im vorliegenden Beispiel dadurch erreicht, dass innerer Rand 22 und innere Wand 31 möglichst parallel zur gemeinsamen Längsachse L von Kassettenelement und Sitzelement verlaufen.

Der äussere Rand 23 des Sitzelements dient der mechanischen Versteifung der Sitzfläche 21. Da der äussere Rand 23 des Sitzelements über die äussere Wand 32 des Kassettenelements vorragt, ist die Ausnehmung 11 gegen oben durch die Sitzfläche abgedeckt, und so vor dem Eindringen von Schmutz geschützt.

Das Sitzelement 2 und das Kassettenelement 3 sind über mindestens zwei Schraubenverbindungen reversibel miteinander verbunden. Im gezeigten Beispiel sind es vier Schraubverbindungen 13, 14. Zu diesem Zweck sind im dargestellten Beispiel im Sitzelement Muttern 14 drehfest angeordnet, in einer entsprechenden Anzahl von nach unten (d.h. von der Sitzfläche 21 weg) zeigenden, vorspringenden Aufnahmen 27. Das Kassettenelement wiederum weist eine entsprechende Anzahl von Schraubenkanälen 34 auf, die Teil der inneren Wand 31 sind, und welche am unteren Ende offen sind. Zum Zusammenbau der Kassette wird je eine Schraube 13 durch je einen Schraubenkanal 34 geführt und in der Gegenmutter 14 der Aufnahme 27 festgeschraubt.

In Figur 3(e) ist schematisch der vorgesehene Verlauf 41 des Folienschlauchs 4 in der Kassette 1 dargestellt. Im Lagervolumen 12 ist der Folienschlauch ziehharmonikaähnlich zusammengerafft gelagert. Ein der umlaufenden äusseren Ausnehmung 11 zugewandtes Ende des Schlauchs 4 verläuft durch diese Ausnehmung 11, von dort bündig über den äusseren Rand 23 und die Sitzfläche 21, und schliesslich in die Öffnung 15 der Kassette.

Im Betrieb einer Toilettenvorrichtung wird das Ende der Schlauchfolie zusammengeschweisst oder auf andere Art dichtend verschlossen, und unterhalb der Sitzfläche festgehalten, so dass sich ein nach oben offener Beutel zur Aufnahme der Ausscheidungsprodukte bildet. Nach der Benutzung wird der Schlauch 4 nach unten gezogen, dichtend verschlossen, und der befüllte Beutel abgetrennt. Durch dieses Ziehen am Folienende wird frische Folie aus dem Lagervolumen 12 nachgezogen, und bedeckt die Sitzfläche 21.

Die gezeigten Schraubverbindungen im oben genannten Ausführungsbeispiel dienen der Fixierung des Sitzelements 2 und des Kassettenelements 3 zueinander, sind aber keinen grösseren Kräften ausgesetzt. In dem gezeigten Ausführungsbeispiel sind gefluchtet zu den Schraubenkanälen in der Wand 31 teilkreisförmige Vertiefungen 35 angeordnet, in welchen im zusammenmontierten Zustand der Kassette die vorstehenden zapfenförmigen Aufnahmen 27 des Sitzelements 2 angeordnet ist. Die Vertiefungen 35 und die zapfenförmigen Aufnahmen 27 definieren auf einfache Art eine korrekte Orientierung von Sitzelement 2 und Kassettenelement 3 zueinander, und vereinfachen so die Montage.

In einer alternativen Ausführungsform einer Kassette sind Zentrierungselemente vorgesehen, welche die korrekte Orientierung und Fixierung senkrecht zur Längsachse sicherstellen. Dies kann beispielsweise durch Zapfen-Loch-Kombinationen erreicht werden, oder durch einen Kragen auf dem inneren Rand des Sitzelements, welcher auf der inneren oder äusseren Seite der inneren Wand 21 aufliegt. Die Fixierung entlang der Längsachse L kann dann beispielsweise durch lediglich zwei Schraubverbindungen erfolgen, durch Spannelemente oder andere geeignete Mittel.

Eine andere Ausführungsform einer Kassette 11 ist in Figur 4 dargestellt. Die aussen liegende Ausgabeausnehmung 11 ist nahe am Boden 33 des Kassettenelements 3 angeordnet, was erreicht wird durch eine Verlängerung des äusseren Rands 23 des Sitzelements gegen unten, und eine entsprechende Verkürzung der äusseren Wand 32 des Kassettenelements. Auf der Innenseite der Folienkassette 1 wiederum ist der innere Rand 22 des Sitzelementes 2 verlängert, und die innere Wand 31 des Kassettenelements verkürzt. Der Verlauf der Folie ist identisch zu den Figuren 2 und 3 und verläuft über die Sitzfläche 21. Diese Ausführungsvariante hat den Vorteil, dass praktisch die gesamte Kassette durch die Folie abgedeckt wird, was eine Verschmutzung verhindert. Gleich wie die U-förmige Gestaltung des Kassettenelements aus den Figuren 2 und 3 bietet die U-förmige Gestaltung der Sitzfläche den Vorteil einer einfacheren Befüllung mit Folienschlauch, wobei im Beispiel dieser Figur das Sitzelement 2 auf den Kopf gestellt wird.

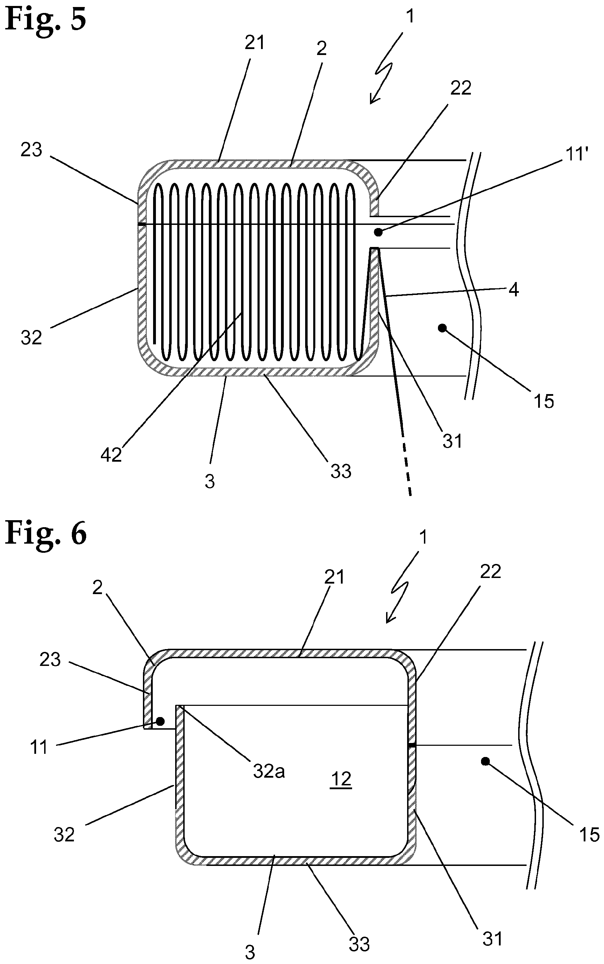

Eine Ausführungsform einer erfindungsgemässen Kassette 1 ist in Figur 5 schematisch dargestellt. In der dargestellten Kassette 1 liegt der äussere Rand 23 des Sitzelements 2 auf der äusseren Wand 32 des Kassettenelements 3, während zur Öffnung 15 hin eine innen liegende umlaufende Ausnehmung 11' vorgesehen ist. Der Folienschlauch verläuft in diesem Fall nicht über die Sitzfläche 21, sondern direkt nach unten.

Eine andere Ausführungsvariante einer Kassette ist Figur 6 gezeigt. In dieser überragt der äussere Rand 23 des Sitzelements 2 die äussere Wand 32 des Kassettenelements 3. Zusätzlich überlappt der Rand 23 auch den oberen Rand 32a der Aussenwand 32, was die Ausnehmung 11 auch gegen aussen hin gegen das Eindringen von Schmutz schützt.

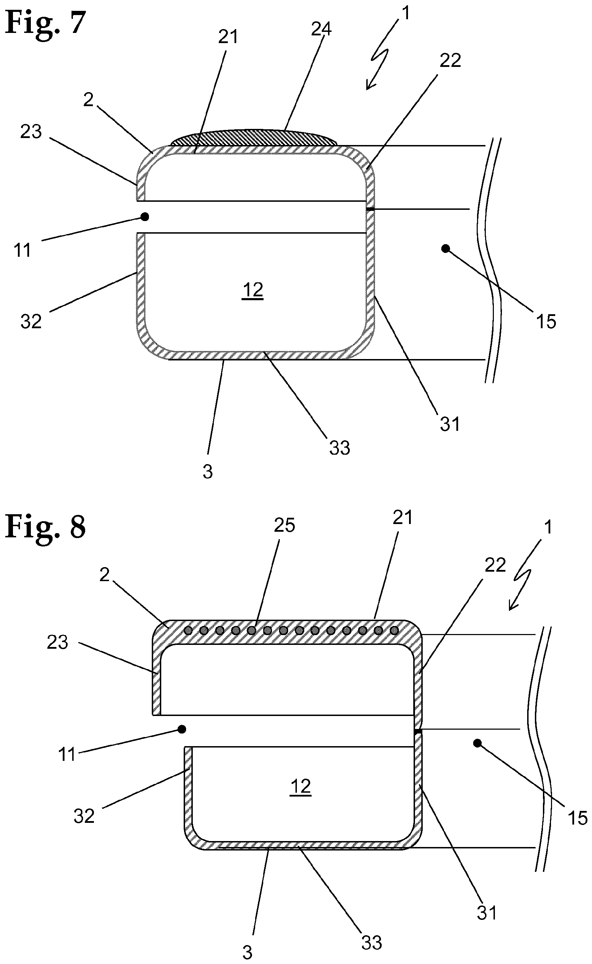

Eine weitere Variante einer Kassette ist in Figur 7 dargestellt. Hier ist auf der Sitzfläche 21 eine Polsterung 25 angeordnet. Diese erhöht den Sitzkomfort für einen Benutzer. Zudem kann eine solche Polsterung auch der Wärmeisolation dienen, beispielsweise bei Sitzflächen aus Metall, was ebenfalls den Sitzkomfort erhöht.

Noch eine andere Variante einer Kassette ist in Figur 8 dargestellt. Bei dieser weist die Sitzfläche 21 eine Heizvorrichtung 25 auf, beispielsweise wie gezeigt in Form elektrischer Heizdrähte, welche in der Sitzfläche eingelassen sind.

Die vorliegende Erfindung ist in ihrem Umfang nicht auf die hier beschriebenen spezifischen Ausführungsformen beschränkt. Vielmehr ergeben sich für den Fachmann aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen. Zusätzlich werden in der Beschreibung verschiedene Referenzen zitiert, deren Offenbarungsgehalt hiermit in deren Gesamtheit durch Referenz in die Beschreibung mit aufgenommen wird.

### Bezugszeichenliste

- 1: Folienkassette, Kassette für Folienschlauch
- 11, 11': Abgabeausnehmung
- 12: Lagervolumen
- 13: Schraube
- 14: Mutter
- 15: Öffnung
- 2: Sitzelement
- 21: Sitzfläche
- 22: innerer Rand
- 23: äusserer Rand
- 24: Polsterung
- 25: Heizvorrichtung
- 26: zapfenförmige Aufnahme für Gegenmutter
- 3: Kassettenelement
- 31: Innenwand
- 31a: oberer Rand der Innenwand
- 32: Aussenwand
- 32a: oberer Rand der Aussenwand
- 33: Kassettenboden
- 34: Schraubenkanal
- 35: teilkreisförmige Vertiefung
- 4: Folienschlauch
- 41: Verlauf der Folie
- 42: Schlauchvorrat
- 101: Toilettenvorrichtung
- 102: Rahmenstruktur
- 120: Gehäuse
- 121: Auffangbehälter
- 122: Verschliess- und Abtrennvorrichtung
- 103: Sitz
- 131: Schlauchvorrat
- 132: Sitzelement
- 135: Öffnung
- 141: Folienschlauch
- 142: Ausscheidungsprodukte, Beutelinhalt
- 143: offener Beutel
- 144: geschlossener Beutel
- 106: Benutzer
- 170: Boden
- A: Benutzungsposition
- B: Entleerungsposition
- L: Längsachse der Kassette
- Z: Zentrum der Kassette

## Patentansprüche

1. Kassette (1) für Folienschlauch zur Verwendung in einer Toilettenvorrichtung, umfassend ein im Wesentlichen ringförmiges Kassettenelement (3) zur Aufnahme eines Folienschlauchs (4), mit einem Boden (33), einer äusseren Wand (32) und einer inneren Wand (31), und ein im wesentlichen ringförmiges Sitzelement (2) mit einer Sitzfläche (21), wobei die innere Wand, die äussere Wand und der Boden des Kassettenelements sowie die Sitzfläche des Sitzelements einen im Wesentlichen ringförmigen Lagerraum (12) zur Aufnahme des Folienschlauchs bilden, und wobei das genannte Sitzelement entlang eines äusseren Rands (23) auf der äusseren Wand des Kassettenelements aufliegend mit dem Kassettenelement verbunden (13, 14) ist, wobei das Sitzelement (2) entlang des äusseren Rands (23) auf der äusseren Wand (32) des Kassettenelements (3) aufliegt und entlang einem inneren Umfang der Kassette (1) zwischen einem inneren Rand (22) des Sitzelements und der inneren Wand (31) des Kassettenelements eine durchgehende Ausnehmung (11') zur Abgabe des Folienschlauchs (4) vorgesehen ist und das Kassettenelement (3) und das Sitzelement (2) reversibel miteinander verbunden (13, 14) sind.

2. Kassette nach Anspruch 1, wobei in Richtung Zentrum (Z) der Kassette hin gesehen der innere Rand (22) des Sitzelements (2) die innere Wand (31) des Kassettenelements (3) überragt.

3. Kassette nach Anspruch, wobei der innere Rand (22) des Sitzelements (2) einen oberen Rand (31 a) der inneren Wand (31) des Kassettenelements (3) überlappt.

4. Kassette nach einem der vorhergehenden Ansprüche, mit einem Folienschlauch (4), der innerhalb des Lagerraums (12) angeordnet ist, wobei ein Ende des Folienschlauchs vom Lagerraum her durch die Ausnehmung (11' ) hindurch nach aussen gezogen ist.

5. Kassette nach einem der vorhergehenden Ansprüche, wobei das Kassettenelement (3) und das Sitzelement (2) durch zwei oder mehr Schraubverbindungen (13, 14) verbunden sind.

6. Kassette nach einem der vorhergehenden Ansprüche, wobei das Kassettenelement (3) und/oder das Sitzelement (2) dampfsterilisierbar bzw. autoklavierbar sind.

7. Kassette nach einem der vorhergehenden Ansprüche, wobei die Sitzfläche (21) des Sitzelements (2) eine Polsterung (24) aufweist.

8. Kassette nach einem der vorhergehenden Ansprüche, wobei in der Sitzfläche (21) des Sitzelements (2) eine Heizvorrichtung (25) vorgesehen ist.

9. Kit umfassend eine oder mehrere Kassetten (1) für Folienschlauch nach einem der Ansprüche 1 oder 2 und einen oder mehrere Folienschläuchen (4).

10. Toilettenvorrichtung (101) mit einer Kassette (1) nach einem der Ansprüche 1 bis 8 oder einem Kit nach Anspruch 9.

## Claims

1. Film-tube cassette (1) for use in a toilet facility, comprising an essentially annular cassette element (3) for accommodating a film tube (4), the cassette element having a base (33), an outer wall (32) and an inner wall (31), and also comprising an essentially annular seat element (2) with a seat surface (21), wherein the inner wall, the outer wall and the base of the cassette element and also the seat surface of the seat element form an essentially annular storage space (12) for accommodating the film tube, and wherein the aforementioned seat element is connected (13, 14) to the cassette element along an outer periphery (23) in a state in which it rests on the outer wall of the cassette element, wherein the seat element (2) rests on the outer wall (32) of the cassette element (3) along the outer periphery (23), and a continuous aperture (11') for discharging the film tube (4) is provided along an inner circumference of the cassette (1), between an inner periphery (22) of the seat element and the inner wall (31) of the cassette element, and the cassette element (3) and the seat element (2) are connected (13, 14) to one another in a reversible manner.

2. Cassette according to Claim 1, wherein the inner periphery (22) of the seat element (2) projects beyond the inner wall (31) of the cassette element (3), as seen in the direction of the centre (Z) of the cassette.

3. Cassette according to Claim 2, wherein the inner periphery (22) of the seat element (2) overlaps an upper periphery (31a) of the inner wall (31) of the cassette element (3).

4. Cassette according to one of the preceding claims, having a film tube (4) which is arranged within the storage space (12), wherein one end of the film tube is pulled outwards from the storage space through the aperture (11').

5. Cassette according to one of the preceding claims, wherein the cassette element (3) and the seat element (2) are connected by two or more screw connections (13, 14) .

6. Cassette according to one of the preceding claims, wherein the cassette element (3) and/or the seat element (2) are/is steam-sterilizable or autoclavable.

7. Cassette according to one of the preceding claims, wherein the seat surface (21) of the seat element (2) has padding (24).

8. Cassette according to one of the preceding claims, wherein a heating device (25) is provided in the seat surface (21) of the seat element (2).

9. Kit comprising one or more film-tube cassettes (1) according to either of Claims 1 and 2 and one or more film tubes (4).

10. Toilet facility (101) having a cassette (1) according to one of Claims 1 to 8 or a kit according to Claim 9.

## Revendications

1. Cassette (1) pour un tuyau de film destiné à être utilisé dans un dispositif de toilettes, comprenant un élément de cassette (3) substantiellement annulaire destiné à recevoir un tuyau de film (4), doté d'un fond (33), d'une paroi extérieure (32) et d'une paroi intérieure (31), et un élément formant siège (2) substantiellement annulaire doté d'une surface d'assise (21), la paroi intérieure, la paroi extérieure et le fond de l'élément de cassette ainsi que la surface d'assise de l'élément formant siège constituant un espace de stockage (12) substantiellement annulaire destiné à recevoir le tuyau de film, et dans laquelle ledit élément formant siège est relié (13, 14) à l'élément de cassette le long d'un bord extérieur (23) en appui sur la paroi extérieure de l'élément de cassette, dans laquelle l'élément formant siège (2) est en appui le long d'un bord extérieur (23) sur la paroi extérieure (32) de l'élément de cassette (3), et le long d'une circonférence intérieure de la cassette (1) un évidement continu (11') est prévu pour débiter le tuyau de film (4) entre un bord intérieur (22) de l'élément formant siège et la paroi intérieure (31) de l'élément de cassette, et l'élément de cassette (3) et l'élément formant siège (2) sont reliés ensemble de manière réversible (13, 14).

2. Cassette selon la revendication 1, dans laquelle, vu en direction du centre (Z) de la cassette, le bord intérieur (22) de l'élément formant siège (2) dépasse de la paroi intérieure (31) de l'élément de cassette (3).

3. Cassette selon la revendication 2, dans laquelle le bord intérieur (22) de l'élément formant siège (2) se chevauche avec un bord supérieur (31a) de la paroi intérieure (31) de l'élément de cassette (3).

4. Cassette selon l'une quelconque des revendications précédentes, comprenant un tuyau de film (4) qui est disposé à l'intérieur de l'espace de stockage (12), une extrémité du tuyau de film étant tirée vers l'extérieur à partir de l'espace de stockage à travers l'évidement (11').

5. Cassette selon l'une quelconque des revendications précédentes, dans laquelle l'élément de cassette (3) et l'élément de siège (2) sont reliés par deux ou plusieurs vissages (13, 14).

6. Cassette selon l'une quelconque des revendications précédentes, dans laquelle l'élément de cassette (3) et/ou l'élément formant siège (2) sont stérilisables à la vapeur ou autoclavables.

7. Cassette selon l'une quelconque des revendications précédentes, dans laquelle la surface d'assise (21) de l'élément formant siège (2) présente un rembourrage (24).

8. Cassette selon l'une quelconque des revendications précédentes, dans laquelle un dispositif de chauffage (25) est prévu dans la surface d'assise (21) de l'élément formant siège (2).

9. Kit, comprenant une ou plusieurs cassettes (1) pour un tuyau de film selon l'une quelconque des revendications 1 ou 2 et un ou plusieurs tubes de film (4) .

10. Dispositif de toilettes (101), comprenant une cassette (1) selon l'une quelconque des revendications 1 à 8 ou un kit selon la revendication 9.
